# FASCICULE DE BREVET EUROPEEN

(11) **EP 4 680 807 B1**
(45) Date de publication et mention de la délivrance du brevet: **30.09.2026**
(21) Numéro de dépôt: 24718582.0
(22) Date de dépôt: 12.03.2024
(51) Int. Cl.: E01B 2/00, E01B 26/00, H02S 20/20, H02S 30/00

(54) **DISPOSITIF POUR LA FIXATION ET L'ENLÈVEMENT MÉCANISÉS D'OBJETS FONCTIONNELS ENTRE DEUX RAILS D'UNE VOIE FERRÉE**
VORRICHTUNG ZUM MECHANISIERTEN BEFESTIGEN UND ENTFERNEN VON FUNKTIONSGEGENSTÄNDEN ZWISCHEN ZWEI SCHIENEN EINES GLEISES
DEVICE FOR THE MECHANIZED FASTENING AND REMOVAL OF FUNCTIONAL OBJECTS BETWEEN TWO RAILS OF A RAILWAY TRACK

(30) Priorité: 15.03.2023 WO PCT/IB2023/052511
(43) Date de publication de la demande: 21.01.2026
(73) Titulaire: SOLAFIX SA, 1024 Ecublens (CH)
(72) Inventeur: SCUDERI, Joseph, 1024 Ecublens (CH); JAQUET, Cyril, 2022 Bevaix (CH); PERRIER, Eric, 1304 Disy (CH); DELAY, Mattéo, 1800 Vevey (CH); BISELX, Thierry, 1870 Monthey (CH); KRASNIQI, Maniks, 1373 Chavornay (CH)
(74) Mandataire: Grosfillier, Philippe
(86) Numéro de dépôt international: PCT/IB2024/052381
(87) Numéro de publication internationale: WO 2024/189537

(56) Documents cités:
- EP-A1- 2 998 439
- WO-A1-2021/074907
- WO-A1-2022/130307
- DE-U1- 202011 103 383

## Description

### Demande correspondante

La présente demande revendique la priorité de la demande internationale antérieure N° PCT/IB2023/052511, déposée le 15 mars 2023 au nom de Monsieur Joseph SCUDERI.

### Domaine de l'invention

La présente invention concerne le domaine ferroviaire et plus précisément l'exploitation des zones occupées par les voies ferrées. La présente invention concerne en particulier l'installation et l'enlèvement , par exemple au travers de moyens mécaniques, d'objets fonctionnels comme des panneaux solaires, sur une voie ferrée.

### Etat de la technique

Dans certains pays, le réseau ferroviaire occupe une partie importante du territoire. En Suisse par exemple, le réseau ferroviaire comprend plus de 5000 km de voies ferrées.

Il existe par ailleurs un besoin croissant de surfaces disponibles pour déposer des objets fonctionnels, notamment dans le domaine de l'énergie et des communications. Un secteur particulièrement concerné est l'utilisation de panneaux solaires (photovoltaïques, thermiques ou hybrides).

Les documents brevet JP 2014 234 644 et KR 10 125 32 98 divulguent des panneaux solaires qui sont disposés entre les rails de voies ferrées.

Avec le dispositif de JP 2014 234 644, les panneaux sont fixés au moyen d'éléments qui doivent être insérés sous les rails. Le système décrit dans KR 10 125 32 98 présente des panneaux solaires qui sont fixés sur les côtés internes des rails, au moyen d'éléments élastiques, ce qui a pour effet d'atténuer les vibrations induites dans les panneaux lors du passage d'un train.

La mise en place et la fixation de ces panneaux est toutefois compliquée et la durée d'installation peut être relativement longue. Les éléments de fixation aux rails sont en outre directement liés aux panneaux fonctionnels. Dans ce type de configuration, les panneaux font donc partie du dispositif de fixation et subissent en conséquence des contraintes mécaniques indésirables, pouvant détériorer les panneaux fonctionnels. La disposition d'éléments de fixation sur les panneaux fonctionnels réduit également la largeur des panneaux. La surface fonctionnelle, p.ex. le nombre de cellules photovoltaïques, est par conséquent diminuée.

Un autre exemple est décrit dans la publication WO 2022/130307. Cette publication décrit un dispositif et un procédé pour la fixation d'objets fonctionnels entre deux rails.

De nombreux documents brevet dans ce domaine indiquent comment fixer des panneaux photovoltaïques, de différents formats et sur différents supports, entre les rails d'un chemin de fer. Toutefois, les panneaux photovoltaïques décrits dans ces publications sont conçus spécialement pour être installés entre les rails d'une voie de chemin de fer et ne correspondent pas aux panneaux photovoltaïques de format standard qui mesurent généralement 1000 X 1700 mm, tels qu'on les trouve sur les toits des maisons ou dans les grandes centrales photovoltaïques. En conséquence, il est nécessaire de fabriquer des panneaux solaires spécifiques pour cette application ce qui n'est pas intéressant économiquement.

D'autre part, le fait de fixer de manière permanente des panneaux (ou d'autres objets fonctionnels) aux rails ou sur les traverses a pour conséquence de réduire fortement voire d'empêcher les travaux de maintenance indispensables à l'entretien des voies ferrées.

Enfin, l'installation d'objets fonctionnels comme des panneaux photovoltaïques nécessite la connexion et le passage de câbles électriques, qui généralement restent apparents et risquent de se détériorer à cause des conditions extérieures, des travaux de maintenance ou des rongeurs.

Il est donc souhaitable de faciliter la fixation des panneaux et objets fonctionnels entre les rails, de réduire la durée de leur mise en place, de permettre un retrait rapide provisoire pour la réalisation des travaux de maintenance (bourrage ou meulage des rails), de réduire les coûts et d'augmenter la production en utilisant des panneaux photovoltaïques de taille standard et plus généralement de réduire ou d'éliminer tous les inconvénients précités.

### Description générale de l'invention

La présente invention a notamment pour but de remédier aux problèmes décrits ci-dessus et de proposer un système amélioré basé sur celui décrit dans WO 2022/130307.

Par "objet fonctionnel", on entend dans le cadre de la présente invention tout objet contribuant à la réalisation d'une fonctionnalité recherchée. A ce titre, on peut citer de manière non-exhaustive les objets fonctionnels suivants : Panneaux photovoltaïques, panneaux thermiques, panneaux hybrides, batteries, conducteurs électriques, éléments fluidiques, instruments de mesures, ou autres objets équivalents etc...

La géométrie des objets fonctionnels peut être quelconque mais de taille standard pour tirer parti des caractéristiques et avantages de la présente invention. Elle doit cependant permettre la disposition des objets fonctionnels entre les rails d'une voie ferrée, sans entraver le trafic ferroviaire.

A cet effet, l'invention concerne notamment un dispositif pour une installation mécanisée (de préférence automatisée) d'objets fonctionnels de taille standard, p.ex. des panneaux photovoltaïques, entre les rails d'une voie ferrée. Elle sera mieux comprise par la description non-limitative qui suit de modes d'exécution et de variantes de celle-ci.

Dans des modes d'exécution, l'invention concerne un dispositif pour la fixation et l'enlèvement mécanique d'objets fonctionnels entre les rails d'une voie ferrée comprenant au moins:
- ) un cadre destiné à porter au moins un objet fonctionnel;
- ) des moyens de fixation du cadre aux rails;
- ) des moyens pour relier mécaniquement et électriquement au moins deux cadres entre eux.

Dans des modes d'exécution, les moyens de fixation du cadre aux rails peuvent être réglés longitudinalement dans un sens parallèle à la voie ferrée.

Dans des modes d'exécution, les moyens pour relier mécaniquement et électriquement les cadres entre eux comprennent une partie mâle et une partie femelle.

Dans des modes d'exécution, les moyens de fixation comprennent des pistons et une double came.

Dans des modes d'exécution, le dispositif comprend des moyens pour déplacer verticalement la partie mâle.

Dans des modes d'exécution, le dispositif comprend des moyens d'alignement.

Dans des modes d'exécution, le dispositif comprend des longerons longitudinaux pour appuyer le cadre sur les traverses.

Dans des modes d'exécution, les longerons ont une position basse et une position haute.

Dans des modes d'exécution, le dispositif comprend des moyens pour bloquer l'accouplement des parties mâle et femelle.

Dans des modes d'exécution, le dispositif comprend au moins une paire de bras télescopiques pour bloquer un mouvement vertical du cadre.

Dans des modes d'exécution, les bras comprennent au moins une tête destinée se plaquer sous le champignon d'un rail, ou une partie destinée à s'insérer sous un rail ou les deux.

Dans des modes d'exécution, le dispositif comprend une goupille permettant de bloquer le mouvement des bras télescopiques.

Dans des modes d'exécution, le dispositif comprend au moins un ressort entre le cadre et l'objet fonctionnel de façon à absorber des vibrations, par exemple lors du passage d'un train.

Dans des modes d'exécution, le dispositif est combiné à deux chariots comprenant des roues, lesdits chariots étant utilisés pour soulever un cadre et le déplacer sur les rails afin de permettre des travaux sur la zone de la voie se trouvant en dessous dudit cadre.

Dans des modes d'exécution, l'objet fonctionnel est (sont) un ou plusieurs panneau(x) photovoltaïque(s). D'autres objets fonctionnels sont bien entendu possibles dans le cadre de la présente invention, notamment comme décrits dans la présente demande.

Dans des modes d'exécution, le cadre et l'objet fonctionnel sont fixés l'un à l'autre.

Dans d'autres modes d'exécution, le cadre est une partie intégrante de l'objet fonctionnel.

### Description détaillée de l'invention

La figure 1 représente une vue générale en perspective du dispositif selon l'invention.
La figure 2 représente un détail de la figure 1.
Les figures 3 et 4 illustrent des modes d'exécution d'une partie de l'invention.
Les figures 5 et 6 illustrent des modes d'exécution d'une autre partie de l'invention.
Les figures 7 à 10 illustrent des modes d'exécution de moyens de connexion mécanique et électrique selon l'invention.
Les figures 11 à 15 illustrent des modes d'exécution du déplacement des moyens de connexion mécanique et électrique selon l'invention.
Les figures 16 à 18 illustrent des modes d'exécution de longerons placés en-dessous du cadre selon l'invention.
Les figures 19 à 21 illustrent des modes d'exécution des moyens d'ajustement de la longueur d'un cadre selon l'invention.
Les figures 22 et 23 illustrent des modes d'exécution des moyens de fixation des partie mâle et femelle selon l'invention.
Les figures 24 à 28 illustrent des modes d'exécution de moyens permettant le déplacement d'un cadre sur les rails selon l'invention.
Les figures 29 à 34 illustrent des modes d'exécution de moyens permettant de maintenir les cadres en position.
La figure 35 illustre des ressorts permettant d'amortir les vibrations selon un mode d'exécution de l'invention.

### Références numériques utilisées dans les figures

1. Voie de chemin de fer
2. Rails
3. Traverses
10. Cadre
11. Plaque de protection
12. Objet fonctionnel
13. Piston
14. Piston
15. Double came
16. Partie mâle
17. Partie femelle
18. Cône
19. Connexion électrique (partie mâle)
20. Connexion électrique (partie femelle)
21. vis
22. élément de guidage
23, 23'. Longerons longitudinaux
24. levier
25. axe
26. chariot
27, 27'. Roues du chariot
28, 28'. Crochets
30. Bras télescopiques
31. goupille
32. tête de bras
33. extension de bras
34. ressorts

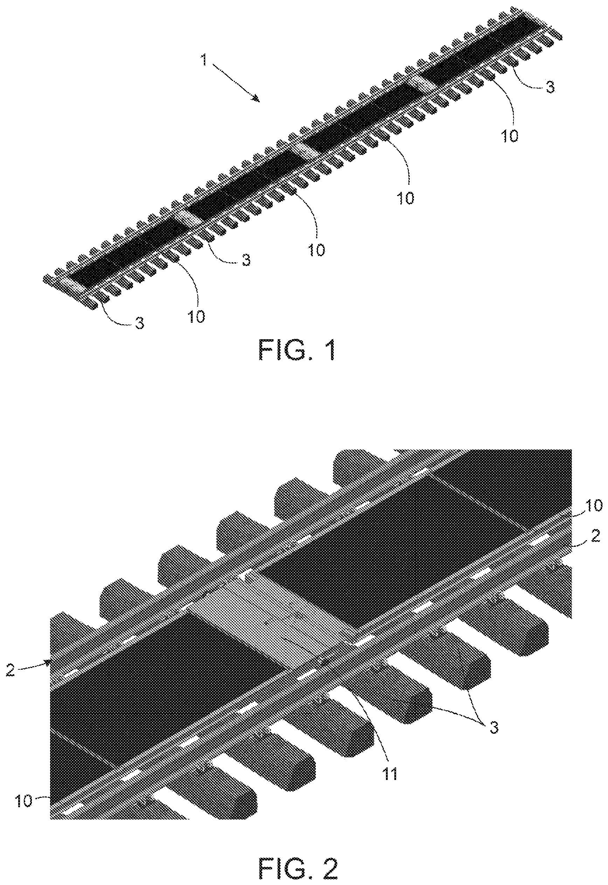

La figure 1 illustre de façon générale et en perspective le principe de l'invention: elle comprend des cadres 10 qui sont disposés entre les rails 2 d'une voie 1 de chemin de fer. Dans la figure 1, on a représenté comme exemple non-limitatif quatre cadres 10 successifs attachés les uns autres avec les moyens de la présente invention comme décrit ci-dessous, mais le nombre de quatre cadres n'est pas limitatif, il pourrait y en avoir moins de quatre ou plus de quatre.
La figure 2 illustre la connexion entre deux cadres 10 voisins, avec une plaque de protection 11.

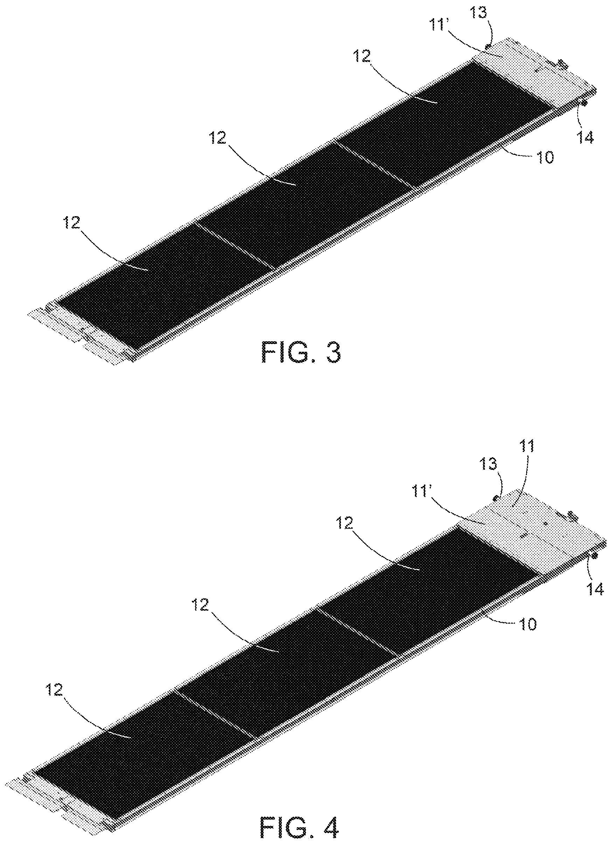

Les figures 3 et 4 illustrent un cadre 10 portant trois objet fonctionnels 12, par exemple des panneaux solaires. Pour ne pas interférer avec les attaches des rails 2 aux traverses 3, le système d'accroche selon l'invention, qui est situé sous la plaque 11, sera toujours positionné entre deux traverses 3 de la voie 2. Mais la distance entre les traverses 3 peut varier avec une tolérance de 2 cm, ce qui fait qu'après quelques dizaines de mètres les accroches pourraient se retrouver en face des attaches des rails 2, ce qui doit être évité. Pour résoudre ce problème, le système d'accroche peut coulisser pour varier la longueur du cadre 10 et faire en sorte que les accroches se retrouvent toujours entre deux traverses 3 de la voie 1.

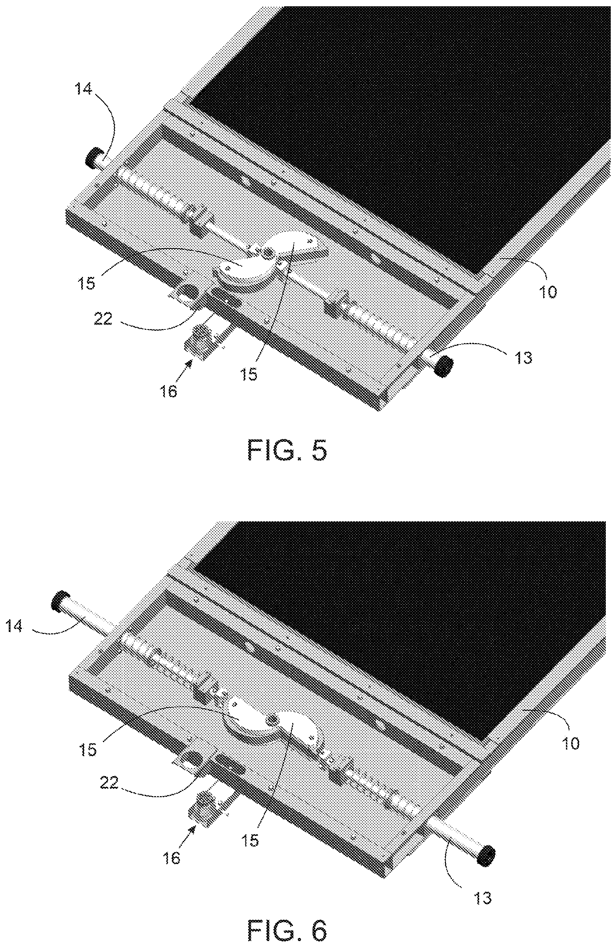

Les figures 5 et 6 illustrent les moyens d'accroche formant le système d'accroche des cadres 10 aux rails 2. Ils comprennent, selon un mode de réalisation de l'invention, un mécanisme articulé comprenant au moins deux pistons 13, 14 placés de chaque côté d'une double came 15 sur laquelle se déplacent des rouleaux. Un mouvement de rotation de 90° de la double came 15 (voir les figures 5 et 6) déplace les pistons 13, 14 de chaque côté du cadre 10 jusqu'à s'appuyer sur la face intérieure des deux rails 2. A l'endroit de la came 15 où la force de poussée est maximale une encoche sur chaque came 15 évite que le mécanisme ne fasse le mouvement inverse de manière spontanée et bloque le cadre 10 en position (voir la figure 6). Les rouleaux se trouvent dans une position stable et les cames 15 sont maintenues dans la position illustrée en figure 6.

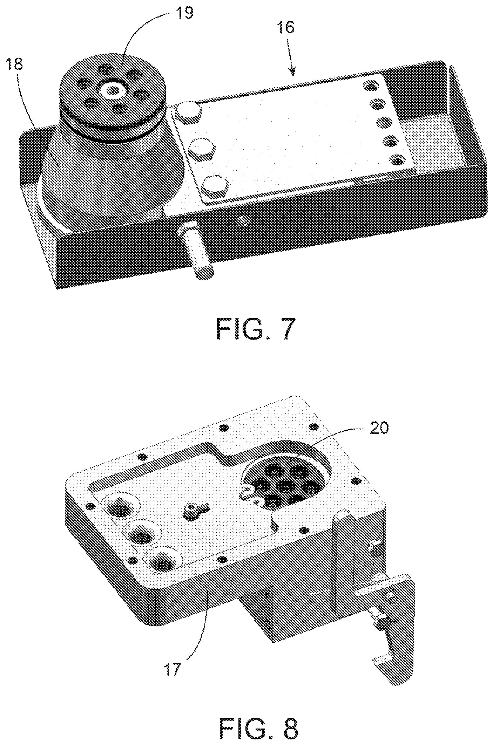

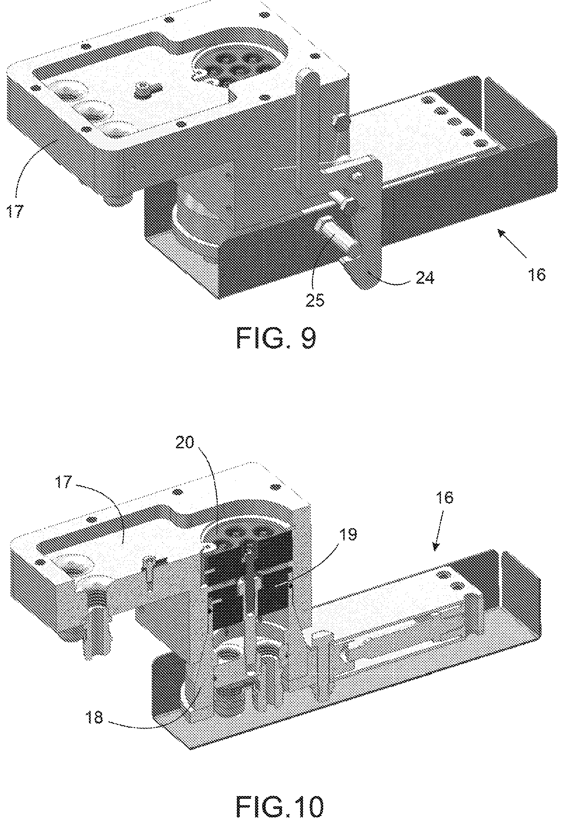

Les figures 7 à 10 illustrent des modes d'exécution des moyens de connexion mécanique et électrique entre les cadres 10. Ces moyens comprennent une partie mâle 16 et une partie femelle 17. La partie mâle est illustrée en perspective en figure 7 et comprend notamment un cône 18 qui est destiné à s'emboîter dans une contrepièce correspondante de la partie femelle 17, formant un assemblage autocentré (voir la coupe dans la figure 10). La partie mâle comprend également des moyens de connexion électrique 19 destinés à se connecter à des moyens correspondant 20 sur la partie femelle 17. Ladite partie femelle 17 est illustrée en perspective en figure 8 avec ses moyens de connexion électrique 20. La forme géométrique des partie mâle 16 et femelle 17 peut varier et n'est pas limitée à celle illustrée: elle peut être carrée/rectangulaire, en étoile, en losange etc.

L'accouplement des parties mâle 16 et femelle 17 est illustré en perspective dans la figure 9 et en coupe dans la figure 10 où l'on voit également la connexion des moyens de connexion électrique 19 et 20. Comme on le comprend, un cadre 10 comprend à une extrémité une partie mâle 16 et à l'autre extrémité une partie femelle 17 de sorte que deux cadres 10 peuvent s'accoupler l'un à l'autre au travers de ces moyens 16, 17, pour avoir une connexion mécanique et électrique entre eux. Cette façon de faire n'est pas limitée à deux cadres 10, mais est applicable à plusieurs cadres 10 (par exemple quatre comme illustré dans la figure 1).

Comme décrit, les cadres 10 sont reliés les uns aux autres avec des éléments de jonction/parties mâle 16 et femelle 17 mécaniques et électriques. Cependant, en l'état, une fois que plusieurs cadres 10 ont été reliés l'un à l'autre, il n'est pas possible d'enlever un cadre 10 positionné au milieu d'une série de plusieurs cadres 10 connectés les uns aux autres sans devoir tout enlever.

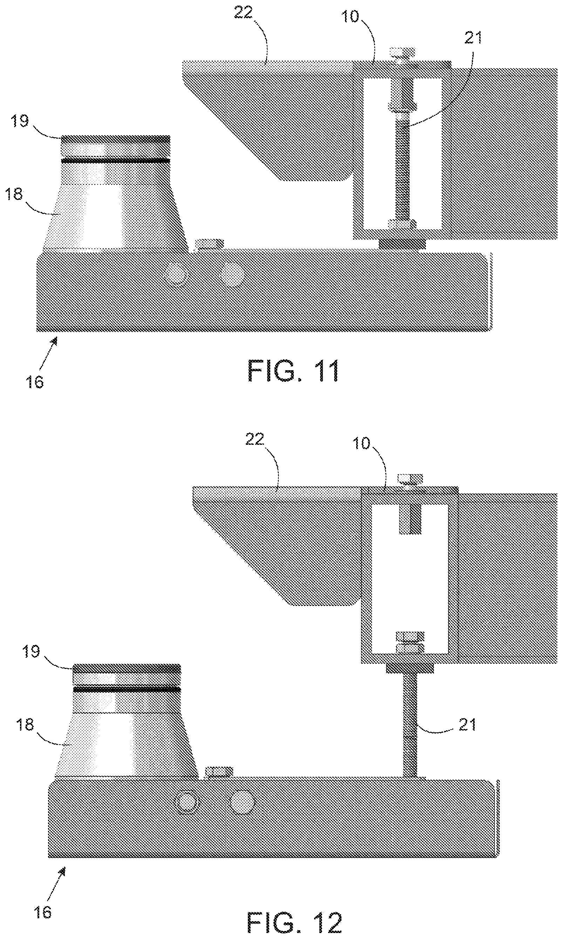

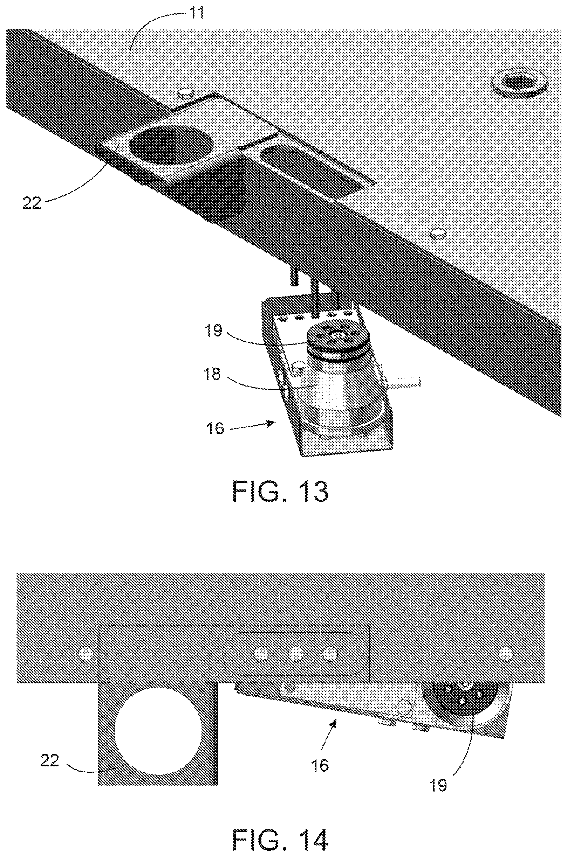

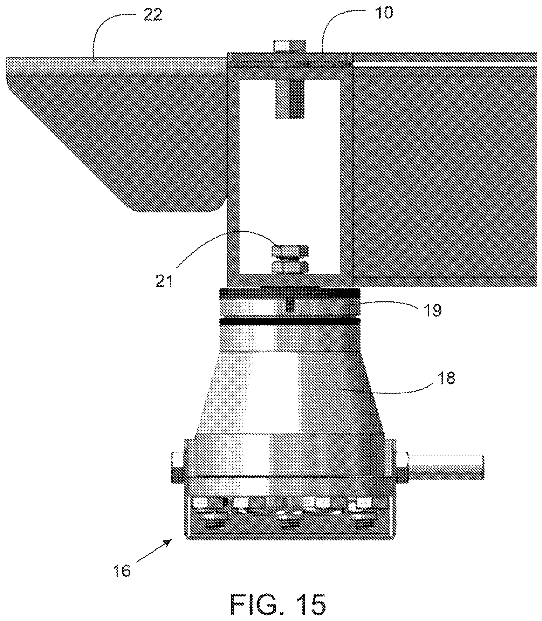

En conséquence, selon l'invention, la jonction mâle 16 peut être désengagée de la jonction femelle 17 grâce à une vis 21 qui va la déplacer vers le bas, voir les figures 11 et 12, et permettre ainsi de retirer un seul cadre 10 d'une série (comme illustrée en figures 3 et 4) pour des besoins de maintenance ponctuelles sur la voie ferrée 1 ou sur le cadre 10 lui-même (p.ex. remplacement en cas de défectuosité). De préférence, une fois retirée, par partie mâle 16 est ensuite déplacée en rotation afin de se retrouver sous le cadre 10 et ne pas empêcher l'extraction du cadre 10 par exemple par une translation selon un axe vertical. La rotation de la partie mâle 16 est illustrée dans les figures 13 à 15.

Enfin, pour faciliter l'assemblage et la jonction des cadres 10 dans un processus mécanisé, dans un mode d'exécution, un élément de guidage 22 placé sur le cadre 10 déjà posé, permet de guider la jonction femelle 17 du cadre à poser et facilite ainsi le positionnement horizontal des deux jonctions 16/17 et la connexion électrique entre les deux cadres 10. Cet élément de guidage 22, illustré dans les figures 11 à 15, est par exemple un trou qui sert de point de référence pour le cadre 10.

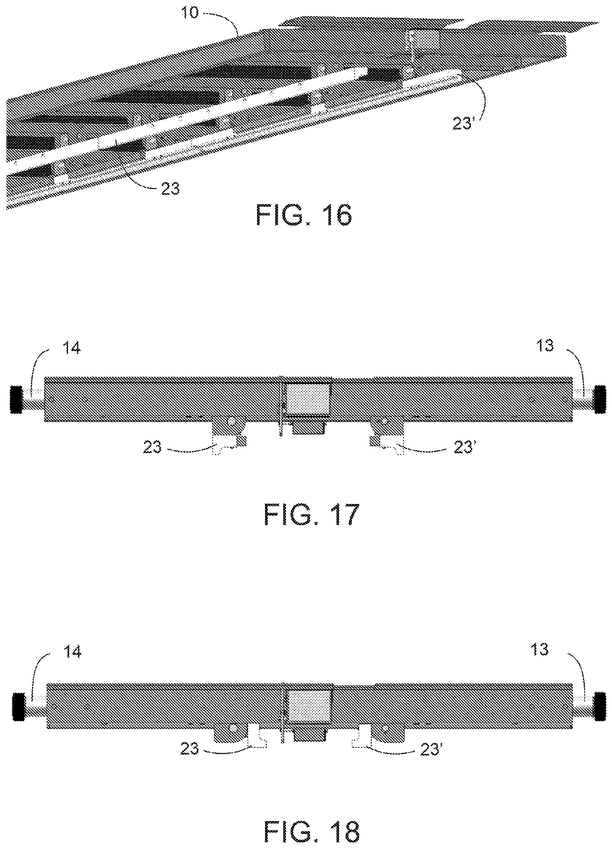

Les figures 16 à 18 illustrent différentes positions des longerons longitudinaux 23, 23' dans un mode d'exécution. Dans les figures 16 et 17, les longerons 23, 23' sont illustrés dans un position basse lorsqu'ils sont utilisés comme supports du cadre 10 sur les traverses 3 de la voie. Dans la figure 18, les longerons 23, 23' sont en position haute ce qui permet de réduire la hauteur des cadres 10 et facilite leur rangement sans perte de place.

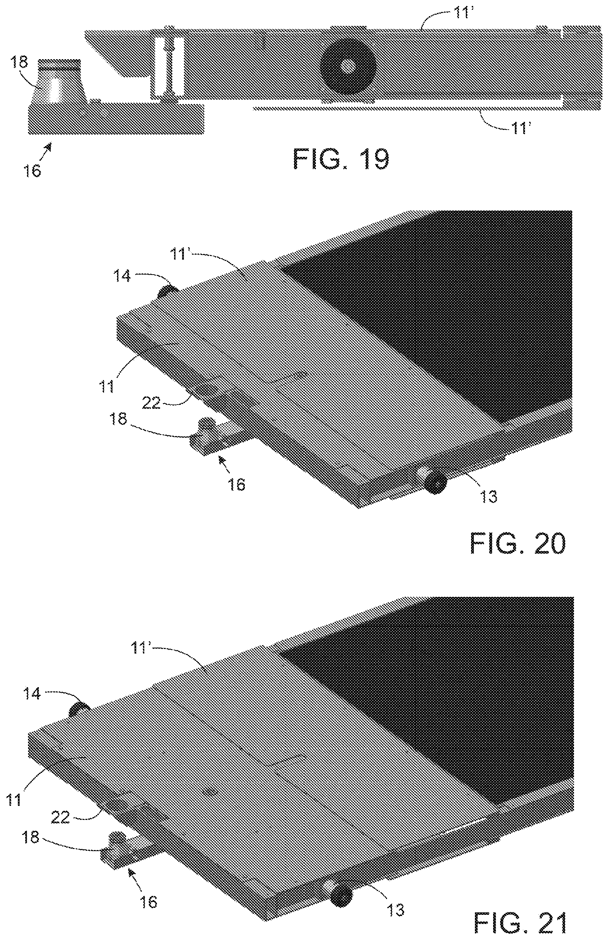

Les figures 19 à 21 illustrent un mode d'exécution d'un système pour ajuster la position des accroches sur les rails 2 (voir également les figure 3 et 4). Comme décrit, le système d'accroche peut coulisser pour varier la longueur du cadre 10 et faire en sorte que les accroches se retrouvent toujours entre deux traverses 3 de la voie 1. De préférence, on utilise une plaque 11' qui reste en position (par exemple pour couvrir et protéger le mécanisme comprenant la double came 15 (voir figures 5 et 6) tandis que le système d'accroche coulisse longitudinalement (voir les figures 20 et 21) pour s'adapter à la position des traverses 3.

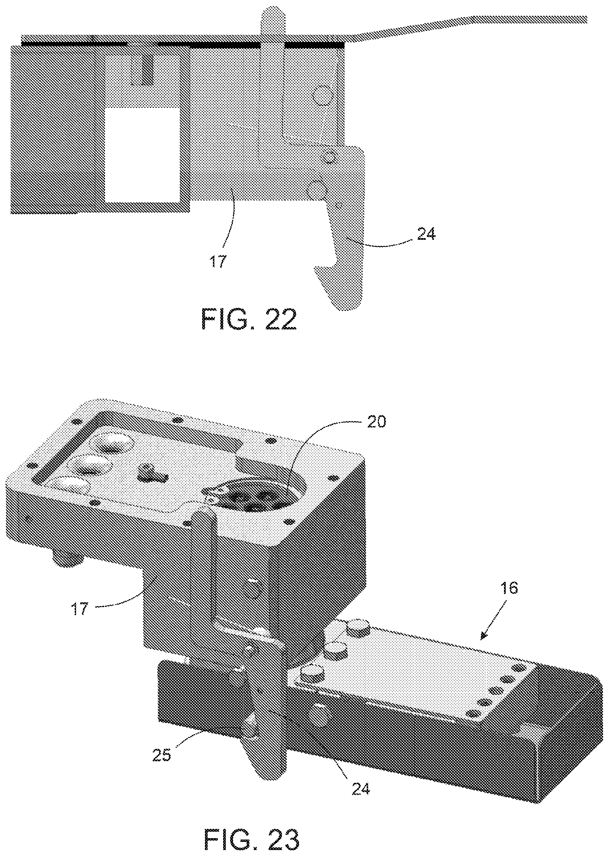

Les figures 22 et 23 illustrent un mode d'exécution de moyens de fixation qui permettent d'assurer le couplage des parties mâle 16 et femelle 17. Ces moyens de fixation comprennent par exemple un levier 24 articulé sur la partie femelle 17 dont une partie vient s'accrocher sous un axe 25 de la partie mâle, voir figure 23. Le découplage est réalisé simplement par un basculement du levier 24. Bien entendu, c'est un exemple non-limitatif et d'autres moyens équivalents peuvent être mis en œuvre pour assurer un tel couplage.

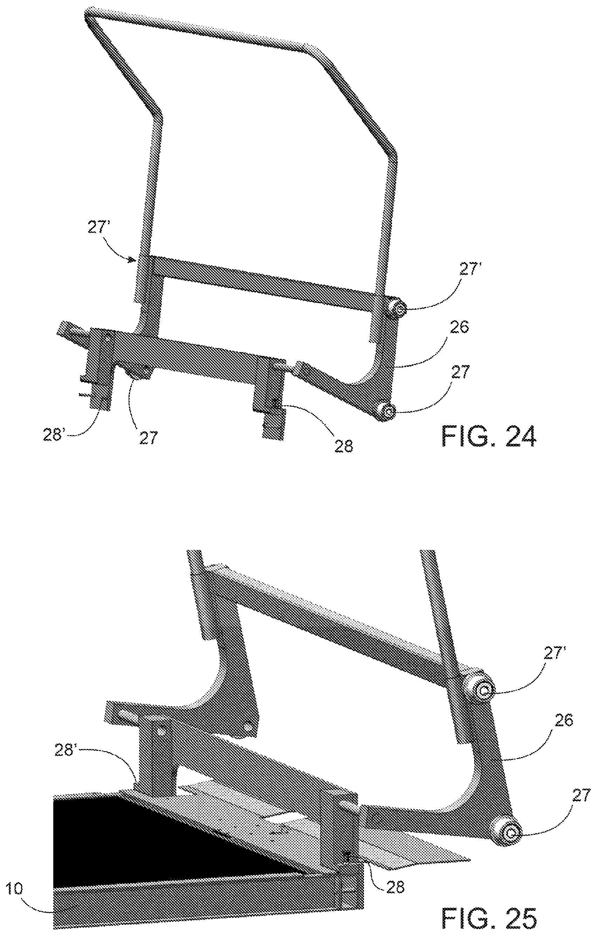

Les figures 24 à 28 illustrent un mode d'exécution de moyens permettant de retirer un cadre 10 de sa position entre les rails afin, par exemple, de permettre des travaux sur la voie se trouvant en dessous dudit cadre. La construction selon l'invention permet effectivement de retirer un cadre 10 unique et non pas un ensemble de cadre 10 qui seraient liés les uns aux autres.

Premièrement, l'accouplement des parties mâle 16 et femelle 17 est défait, par exemple premièrement de détachant le levier 24 (voir figures 22, 23), et en retirant la partie mâle 16 comme illustré dans les figures 11 à 15 et décrit ci-dessus.

Ensuite, on utilise un chariot 26 avec des roues 27, 27' destinées à se déplacer sur les rails 2 et ce chariot fonctionne de façon similiaire aux moyens utilisés en courses de Formule 1 pour soulever une voiture de course lors d'un changement de pneus.

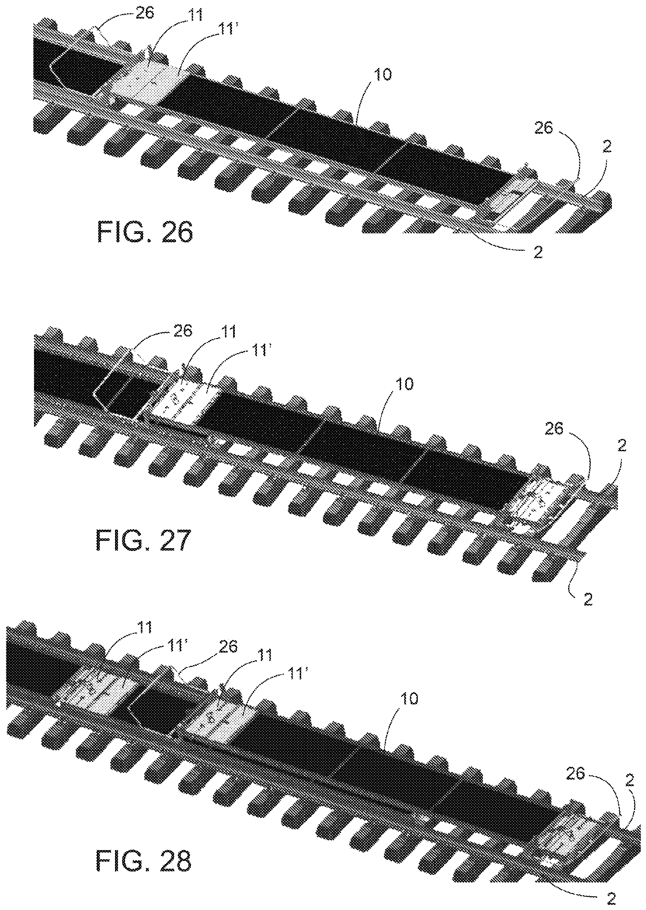

Le chariot 26 comprend par exemple des crochets 28, 28' qui vont s'accrocher au cadre 10, voir figure 25 et permettre par basculement du chariot 26 sur la voie de lever le cadre 10 hors de sa position, voir la figure 26. On effectue cette manipulation aux deux extrémités du cadre 10 pour aboutir au résultat de la figure 26 où le cadre 10 est porté par deux chariots 26 au dessus des rails 2. Le cadre 10 peut ensuite être facilement déplacé, par exemple par une ou deux personnes, en le roulant sur les rails et donner ainsi accès à la voie qui se trouve en dessous du cadre 10 déplacé, voir les figures 27 et 28 qui illustrent un déplacement vers la gauche dans les dessins du cadre soulevé et porté par les chariots 26. Pour ramener le cadre 10 (par exemple après entretien ou réparation ou après remplacement, ou lorsque les travaux sur la voie sont terminés), on procède de la façon inverse. Le cadre 10 est ramené en position au moyens de chariots 26 est ensuite abaissé dans sa position souhaitée, son abaissement réalisant sa connexion mécanique et électrique aux deux cadres 10 voisins.

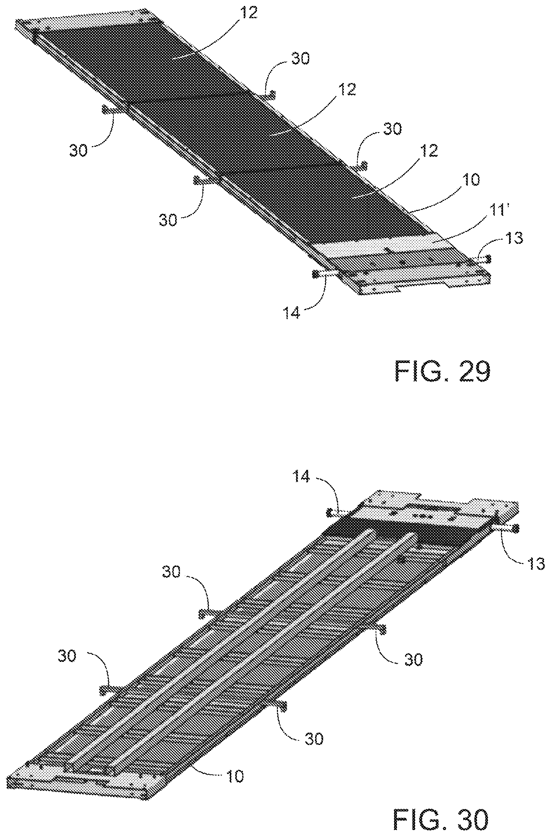

Dans les figures 29 à 34,on a illustré d'autres caractéristiques du dispositif selon des modes d'exécution de l'invention qui sont décrits ci-après.

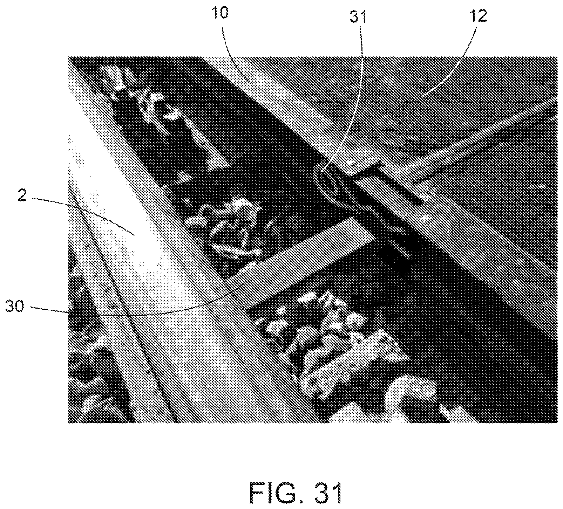

Ces caractéristiques comprennent notamment un bras télescopique 30 comme illustrés en figures 29 (vue en perspective du dessus) et 30 (vue en perspective du dessous). Plus précisément, la cadre 10 comprend une pluralité de ces bras 30, par exemple quatre comme dans la figure 29, deux de chaque côté, lesdits bras étant placés par paires. Ces bras 30 sont utilisés pour prendre appui contre les rails 2 et empêche un déplacement vertical des cadres 10 une fois montés en position entre les rails 2. Une fois les cadres 10 en position, les bras 30 sont sortis et amenés au contact du rail 2 comme illustré en figure 31. Une fois en position, il sont bloqués par exemple par une goupille 31 comme illustré en figure 31. D'autres moyens équivalents sont bien entendu possibles.

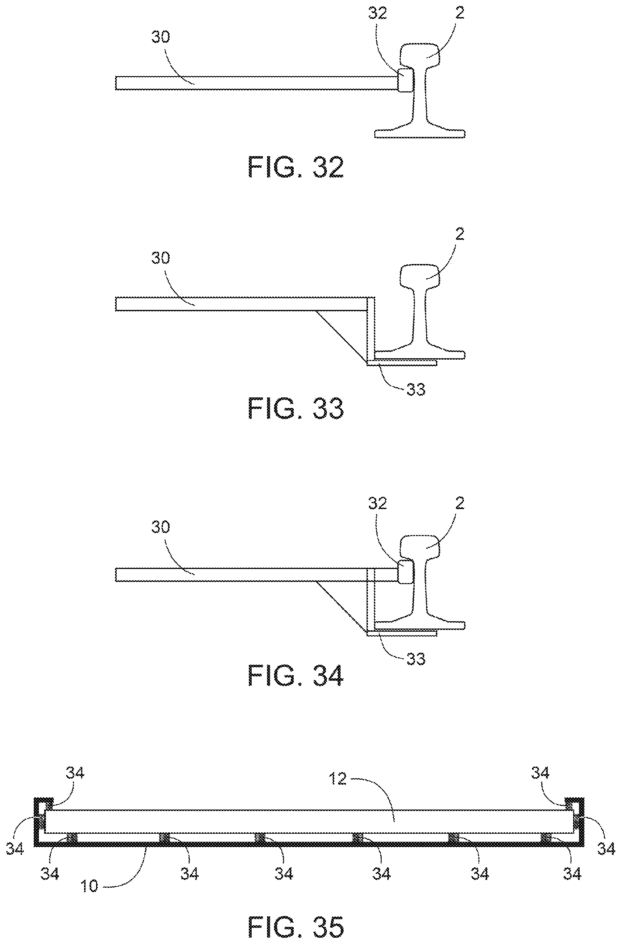

Les figures 32 à 34 illustrent des vues de face de variantes de bras 30. Par exemple, selon la figure 32, le bras 30 comprend une tête 32 qui vient s'appuyer en dessous du champignon du rail 2. Dans la variante de la figure 33, le bras 30 comprend une partie 33, comme une extension, qui s'insère en-dessous du rail 2. La figure 34 illustre une variante formée de la combinaison des modes de réalisation des figures 32 et 33.

Toutes ces variantes et d'autres équivalentes sont applicables à la présente invention sur le cadre 10 comme illustré: un cadre 10 peut comprendre un seul type de bras (p.ex. selon l'une des figures 32 à 34) ou un mélanges de ces variantes.

La figure 35 illustre un mode d'exécution dans lequel des ressorts 34 sont placés entre le cadre 10 et l'objet fonctionnel 12 pour amortir les vibrations, par exemple lors du passage d'un train. Le nombre de ressorts 34 et leurs caractéristiques sont adaptées aux conditions: par exemple poids et/ou dimensions de l'objet fonctionnel 12, vitesse de passage du train etc.

La machine ferroviaire utilisée pour déposer et/ou retirer des cadres et/ou des objets fonctionnels est par exemple telle que décrite dans les demandes antérieures EP0056497A1 et WO 2022/130307.

Il va de soi que l'invention ne se limite pas aux exemples discutés précédemment, mais couvre tout objet défini dans les revendications. A noter en particulier que les deux éléments de fixation d'un même dispositif de fixation ne sont pas forcément identiques et on peut utiliser ceux décrits dans la demande WO 2022/130307.

## Revendications

1. Dispositif pour la fixation et l'enlèvement mécanisés d'objets fonctionnels entre les rails (2) d'une voie ferrée (1) comprenant au moins:
- ) un cadre (10) destiné à porter au moins un objet fonctionnel (12);
- ) des moyens de fixation (13,14,15) du cadre (10) aux rails (2);
- ) des moyens (16,17, 19, 20) pour relier mécaniquement et électriquement au moins deux cadres (10) entre eux.

2. Dispositif selon la revendication 1, dans lequel les moyens de fixation du cadre (10) aux rails (2) peuvent être réglés longitudinalement dans un sens parallèle à la voie ferrée.

3. Dispositif selon l'une des revendications précédentes, dans lequel les moyens pour relier mécaniquement et électriquement les cadres (10) entre eux comprennent une partie mâle (16) et une partie femelle (17).

4. Dispositif selon l'une des revendications précédentes, dans lequel les moyens de fixation comprennent des pistons (13,14) et une double came (15).

5. Dispositif selon l'une des revendications précédentes, comprenant des moyens (21) pour déplacer verticalement la partie mâle (16).

6. Dispositif selon l'une des revendications précédentes, comprenant des moyens d'alignement (22).

7. Dispositif selon l'une des revendications précédentes, comprenant des longerons longitudinaux (23, 23') pour appuyer le cadre (10) sur les traverses (3).

8. Dispositif selon la revendication précédente, dans lequel les longerons (23, 23') ont une position basse et une position haute.

9. Dispositif selon l'une des revendications précédentes, comprenant des moyens (24,25) pour bloquer l'accouplement des parties mâle (16) et femelle (17).

10. Dispositif selon l'une des revendications précédentes, comprenant au moins une paire de bras télescopiques (30, 32, 33) pour bloquer un mouvement vertical du cadre (10).

11. Dispositif selon la revendication précédente, dans lequel les bras comprennent au moins une tête (32) destinée se plaquer sous le champignon d'un rail (2), ou une partie (33) destinée à s'insérer sous un rail (2) ou les deux.

12. Dispositif selon la revendication précédente 10 ou 11, comprenant une goupille (31) permettant de bloquer le mouvement des bras télescopiques (30).

13. Dispositif selon l'une des revendications précédentes, comprenant au moins un ressort (34) entre ledit cadre (10) et l'objet fonctionnel de façon à absorber des vibrations.

14. Dispositif selon l'une des revendications précédentes comprenant deux chariots (26) comprenant des roues (27, 27'), lesdits chariots étant utilisés pour soulever un cadre (10) et le déplacer sur les rails (2) afin de permettre des travaux sur la zone de la voie se trouvant en dessous dudit cadre (10).

15. Dispositif selon l'un des revendications précédentes, dans lequel l'objet fonctionnel est (sont) un ou plusieurs panneau(x) photovoltaïque(s).

## Patentansprüche

1. Vorrichtung zum mechanisierten Befestigen und Entfernen von Funktionsgegenständen zwischen den Schienen (2) eines Eisenbahngleises (1), welche mindestens umfasst:
- ) einen Rahmen (10), der dazu bestimmt ist, mindestens einen Funktionsgegenstand (12) zu tragen;
- ) Mittel zur Befestigung (13, 14, 15) des Rahmens (10) an den Schienen (2);
- ) Mittel (16, 17, 19, 20) zum mechanischen und elektrischen Verbinden mindestens zweier Rahmen (10) miteinander.

2. Vorrichtung nach Anspruch 1, wobei die Mittel zur Befestigung des Rahmens (10) an den Schienen (2) in einer zu dem Eisenbahngleis parallelen Richtung längs verstellt werden können.

3. Vorrichtung nach einem der vorhergehenden Ansprüche, wobei die Mittel zum mechanischen und elektrischen Verbinden der Rahmen (10) miteinander einen Steckteil (16) und einen Aufnahmeteil (17) umfassen.

4. Vorrichtung nach einem der vorhergehenden Ansprüche, wobei die Befestigungsmittel Kolben (13, 14) und einen Doppelnocken (15) umfassen.

5. Vorrichtung nach einem der vorhergehenden Ansprüche, welche Mittel (21) zum vertikalen Verschieben des Steckteils (16) umfassen.

6. Vorrichtung nach einem der vorhergehenden Ansprüche, welche Ausrichtmittel (22) umfasst.

7. Vorrichtung nach einem der vorhergehenden Ansprüche, welche Längsholme (23, 23') zum Abstützen des Rahmens (10) auf den Schwellen (3) umfasst.

8. Vorrichtung nach dem vorhergehenden Anspruch, wobei die Längsholme (23, 23') eine niedrige Position und eine hohe Position aufweisen.

9. Vorrichtung nach einem der vorhergehenden Ansprüche, welche Mittel (24, 25) zum Blockieren der Kopplung des Steckteils (16) und des Aufnahmeteils (17) umfasst.

10. Vorrichtung nach einem der vorhergehenden Ansprüche, welche mindestens ein Paar Teleskoparme (30, 32, 33) zum Blockieren einer vertikalen Bewegung des Rahmens (10) umfasst.

11. Vorrichtung nach dem vorhergehenden Anspruch, wobei die Arme mindestens einen Kopf (32) umfassen, der dazu bestimmt ist, sich unter den Schienenkopf einer Schiene (2) zu pressen, oder einen Teil (33), der dazu bestimmt ist, sich unter einer Schiene (2) oder beiden einzuschieben.

12. Vorrichtung nach dem vorhergehenden Anspruch 10 oder 11, welche einen Splint (31) umfasst, der es ermöglicht, die Bewegung der Teleskoparme (30) zu blockieren.

13. Vorrichtung nach einem der vorhergehenden Ansprüche, welche mindestens eine Feder (34) zwischen dem Rahmen (10) und dem Funktionsgegenstand umfasst, um Schwingungen zu absorbieren.

14. Vorrichtung nach einem der vorhergehenden Ansprüche, welche zwei Schlitten (26) umfasst, die Räder (27, 27') umfassen, wobei die Schlitten verwendet werden, um einen Rahmen (10) anzuheben und ihn auf den Schienen (2) zu platzieren, um Arbeiten auf dem Bereich des Gleises, der sich unterhalb des Rahmens (10) befindet, zu ermöglichen.

15. Vorrichtung nach einem der vorhergehenden Ansprüche, wobei der Funktionsgegenstand ein oder mehrere Solarpanel(e) ist (sind).

## Claims

1. Device for the mechanized fastening and removal of functional objects between the rails (2) of a railway track (1) comprising at least:
- ) a frame (10) intended to carry at least one functional object (12);
- ) fastening means (13, 14, 15) for fastening the frame (10) to the rails (2);
- ) means (16, 17, 19, 20) for mechanically and electrically connecting at least two frames (10) to one another.

2. Device according to Claim 1, wherein the means for fastening the frame (10) to the rails (2) are longitudinally adjustable in a direction parallel to the railway track.

3. Device according to either of the preceding claims, wherein the means for mechanically and electrically connecting the frames (10) to one another comprise a male part (16) and a female part (17).

4. Device according to one of the preceding claims, wherein the fastening means comprise pistons (13, 14) and a double cam (15).

5. Device according to one of the preceding claims, comprising means (21) for vertically moving the male part (16).

6. Device according to one of the preceding claims, comprising alignment means (22).

7. Device according to one of the preceding claims, comprising longitudinal side members (23, 23') for supporting the frame (10) on the sleepers (3).

8. Device according to the preceding claim, wherein the side members (23, 23') have a low position and a high position.

9. Device according to one of the preceding claims, comprising means (24, 25) for locking the coupling of the male part (16) and female part (17).

10. Device according to one of the preceding claims, comprising at least one pair of telescopic arms (30, 32, 33) for preventing the frame (10) from moving vertically.

11. Device according to the preceding claim, wherein the arms comprise at least one head (32) intended to be pressed beneath the head of a rail (2), or a part (33) intended to be inserted beneath a rail (2) or both.

12. Device according to preceding Claim 10 or 11, comprising a pin (31) for preventing the telescopic arms (30) from moving.

13. Device according to one of the preceding claims, comprising at least one spring (34) between said frame (10) and the functional object so as to absorb vibrations.

14. Device according to one of the preceding claims, comprising two carriages (26) comprising wheels (27, 27'), said carriages being used to lift a frame (10) and move it along the rails (2) in order to allow work to be carried out on the region of the track beneath said frame (10).

15. Device according to one of the preceding claims, wherein the functional object is one or more photovoltaic panels.
